# EUROPEAN PATENT SPECIFICATION

(11) **EP 3 392 997 B1**
(45) Date of publication and mention of the grant of the patent: **03.03.2021**
(21) Application number: 18382181.8
(22) Date of filing: 19.03.2018
(51) Int. Cl.: H02J 3/28, H02J 3/38, F24D 19/10, F24D 3/18, F25B 30/02, H02J 3/14

(54) **SYSTEM AND METHOD FOR USING EXCESS ELECTRICAL ENERGY PRODUCED BY AN INSTALLATION WITH RENEWABLE ELECTRICITY GENERATION**
SYSTEM UND VERFAHREN ZUR NUTZUNG DER VON EINER ANLAGE MIT ERNEUERBARER STROMERZEUGUNG ERZEUGTEN ÜBERSCHÜSSIGEN ELEKTRISCHEN ENERGIE
SYSTÈME ET PROCÉDÉ D'UTILISATION DE L'ÉNERGIE ÉLECTRIQUE EXCÉDENTAIRE PRODUITE PAR UNE INSTALLATION AVEC GÉNÉRATION D'ÉLECTRICITÉ RENOUVELABLE

(30) Priority: 17.04.2017 ES 201730620
(43) Date of publication of application: 24.10.2018
(73) Proprietor: Ecoforest Geotermia, S.L., 36204 Vigo (Pontevedra) (ES)
(72) Inventor: PEREZ FERNANDEZ, ELADIO, 36204 VIGO (PONTEVEDRA) (ES); UHIA VIZOSO, FRANCISCO JOSE, 36204 VIGO (PONTEVEDRA) (ES); CALERO FERREIRO, MARTA, 36204 VIGO (PONTEVEDRA) (ES); PEREIRO MELON, ALEJANDRO, 36204 VIGO (PONTEVEDRA) (ES); NOVOA NOVOA, VICTOR, 36204 VIGO (PONTEVEDRA) (ES)
(74) Representative: Clarke Modet & Co.

(56) References cited:
- EP-A1- 3 012 539
- DE-A1-102006 051 421
- FR-A1- 2 960 099
- FR-A1- 3 004 790
- US-A1- 2013 140 015

## Description

### Field of the invention

The present invention pertains to the field of systems for generating electricity by means of renewable sources and, more specifically, systems for using excess electrical energy produced by a system for generating renewable electricity.

### Background of the invention

One of the greatest challenges posed by the generation and self-consumption of electrical energy consists of managing the arbitrary nature of the renewable sources that depend on multiple environmental factors that are difficult to predict, such as sunlight and wind. This unpredictable nature of renewable energies makes it so that in most practical applications, the periods of production do not coincide with the periods of consumption.

Currently, there are systems capable of using the excess from renewable electricity production by means of the controlled activation of loads. However, with these methods it is difficult to restore the energy balance between production and consumption, since every installation has loads that cannot be made to coincide with the period of production, or that upon activation, lead to consumption that does not adjust to production.

In most cases, this requires the systems for generating electricity by means of renewable sources to remain connected to the electrical grid in order to balance the differences between the production and consumption of the installation. Thus, during periods in which consumption exceeds renewable production, the system consumes energy from the grid (net consumption), and during periods in which renewable production exceeds consumption, the system injects the excess into the grid (net production) to restore the balance. However, this solution entails an additional investment and can create instabilities and disruptions in the distribution of energy. On the other hand, the cost of electrical energy in the periods of net consumption of the installation is usually much higher than the benefit gained in the periods of net production of the installation, which makes it an option of little interest from an economic point of view.

For the above reasons, it is of vital importance to look for alternatives that enable excess renewable energy to be stored during the periods of net production so that it can be used during the periods of net consumption and thereby reduce or eliminate dependence on the electrical grid. Among the options for accumulation that currently exist, three main types of applications can be highlighted: storage in the form of electrical energy, storage in the form of potential energy and storage in the form of thermal energy.

Methods of storing the excess in electric batteries have been known for quite some time, which, thanks to technological advances in this field over recent years, have allowed for the proliferation of installations of this type. However, electric batteries have physical limitations associated with the charge density and the useful life thereof and in many cases, in order to ensure that it is possible to cover most of the consumption of an installation at any time, a large number of batteries must be installed, which can significantly increase the cost of installation.

Methods of storing in the form of potential energy in order to use the excess produced by renewable sources, such as the storage of fluids by pumping or of compressed gases, are also known. These methods are based on the use of electrical excesses during the period of net production to pump or compress a fluid, increasing the potential energy thereof to later produce electrical energy by means of a turbine during the periods of net consumption. But, once again, large, expensive installations are needed to cover high consumption of power.

Finally, there is the possibility of storing the excess electrical energy in the form of thermal energy, either in the form of heat or cold. This option has the advantage that most domestic, commercial and industrial installations typically use significant amounts of thermal energy, meaning that the stored energy can be used directly. Among the technologies that allow for thermal storage by means of systems for producing renewable electricity, two main types of applications can be highlighted: those using electrical resistors and those using a heat pump.

The systems for accumulating thermal energy using electrical resistors have the advantage that they entail a very low cost and the yield from transforming electrical energy into thermal energy is 100%, in other words, each electric kW is transformed into one thermal kW. However, they have the drawback that they only allow for the accumulation of thermal energy in the form of heat. Moreover, the systems for accumulating energy based on a heat pump can produce thermal energy in the form of both heat and cold as needed. Furthermore, due to the fact that they transfer energy from a cold point to a warm point, the systems based on a heat pump can reach yields from generating thermal energy from electrical energy of between 300 and 500%, which considerably increases the potential of use of the excess electricity of the renewable production system. It even entails the possibility of using both the heat generation and the cold generation simultaneously, in which case the yields from generating electrical energy into thermal energy can reach values between 700% and 900%.

Another aspect that enables the usage rate of the excess electrical energy to increase is the power modulation capacity of the thermal production system. Thus, the all/nothing production systems, based on electrical resistors as well as on a heat pump, generate uncontrolled electricity consumption, meaning that it cannot be adapted in real time to the production excess. Because of this, it is common that upon activating these thermal production systems, the electricity consumption of the installation is greater than the production of the renewable system, which generates net electricity consumption of the grid with an associated operating cost. Therefore, it is only of interest to activate the production system when above a specific value of excess electricity, which can significantly reduce the potential of use of said excess.

Currently, control systems capable of modulating the power consumed by an electrical resistor with the objective of adjusting the electricity consumption to production in real time, such that the over-consumption of the thermal production system is prevented, are known. However, although there are different manufacturers on the market that sell heat pumps with the capacity to modulate power, there are no known technical solutions that allow this equipment to be used with the objective of adjusting the production/consumption energy balance of an installation. This is due to the technical complexity and the restrictions of use of the heat pumps, which makes it necessary to develop equipment specifically designed to carry out this function in order to obtain an efficient and reliable system.

Document US2013140015-A1 discloses a heat pump system and operation method including: obtaining, on a per time unit basis, an amount of the power generated by the power generation device, an amount of the power consumed by the electric load, and surplus power which is a difference between the generated power and the load power; and controlling operation of the heat pump to cause the heat pump to generate heat using power adjusted to follow a per time unit increase or decrease in the surplus power.

### Description of the invention

The invention relates to a system and method for using excess electrical energy produced by a system for generating renewable electricity, which enables the adjustment between consumption and production in real time by means of the use of modulating heat pumps.

The invention is defined by a system for using excess electrical energy produced by an installation supplied with renewable energy generation and further supplied by a power grid, with the technical features of independent claim 1.

The system can further comprise means of measuring the energy exchange between the electrical grid and the electrical installation. In one embodiment, the means of measuring the energy exchange between the electrical grid and the electrical installation comprise a bidirectional energy meter; the control unit being configured to monitor the energy balance based on the measurements received from the bidirectional energy meter.

The control unit is preferably configured to calculate a value of excess production that restores the energy balance between the electrical grid and the electrical installation. The value of excess production can comprise an energy balance control signal indicative of the demand of excess production that the heat pump should generate or consume.

In one embodiment, the value of excess production comprises at least one value of operation in excess mode indicative of the temperature value of at least one production service of the heat pump. The value of operation in excess mode can comprise at least any one of the following: excess DHW temperature, excess temperature of heating buffer accumulator, excess temperature of cooling buffer accumulator, excess pool temperature, excess flow temperature, and excess ambient temperature.

The value of excess production can comprise a signal of the state of the excess mode indicative that the regulation of excess energy is enabled. The control limit of excess comprises at least any one of the following: upper limit of power exchanged between the electrical grid and the electrical installation, lower limit of power exchanged between the electrical grid and the electrical installation, time during which the upper limit of power is exceeded, time during which the lower limit of power is exceeded

The heat pump can also be configured to manage the demand of excess energy production when the following conditions are met: there is no demand of base production to be met; a signal of the state of the excess mode indicative that the regulation of excess energy is enabled is received; and there is excess electrical energy that can be used to produce or store thermal energy in the electrical installation.

The invention is further defined by a method for using excess electrical energy produced by an installation supplied with renewable energy generation and further supplied by a power grid, with the method steps of independent method claim 11.

The technology for managing excess implemented by the proposed system has the following advantages with respect to the solutions that currently exist:
- It significantly increases the percentage of use of the excess from electricity production produced from renewable sources with respect to the thermal production systems based on all/nothing electrical resistors or heat pumps, since they do not generate significant additional consumption when the system is activated.
- It obtains thermal production yields much higher than those that can be obtained with all/nothing as well as modulating electrical resistors.

### Brief description of the drawings

What follows is a very brief description of a series of drawings that aid in better understanding the invention, and which are expressly related to an embodiment of said invention that is presented by way of a non-limiting example of the same.
Figure 1 shows, according to one embodiment, the elements of the system for managing excess in gray: control unit and modulating heat pump.
Figure 2 shows a process flowchart executed by the control unit to use excess electrical energy produced by an installation with renewable electricity generation.
Figure 3 shows a process flowchart of the functionality of managing excess of the heat bomb.
Figure 4 shows the application of the system for managing excess to an installation for generating solar photovoltaic energy.
Figure 5 shows a sample reading of the energy counter and the different variables that determine if the management of the electrical excess is enabled.
Figure 6 shows an example of the regulation of excess energy using a modulating heat bomb, according to the present invention.
Figures 7A and 7B show a comparison of the potential of use of the excess electricity using an all/nothing heat pump (Figure 7A) or a modulating heat pump (Figure 7B).
Figure 8 shows another example of the system for managing excess applied to an installation for generating solar photovoltaic energy, where the control unit is implemented inside the heat pump itself.

### Detailed description of the invention

The invention relates to a system for using excess from renewable electricity production by means of modulating heat pumps that enable consumption and the excess electrical energy to be adjusted in real time.

The proposed system comprises a control unit that connects to one or several modulating heat pumps, all elements that have been expressly developed and/or adapted for the function described. The heat pumps used can be of any type (water-water, glycol-water, air-water, air-air, etc.), provided that they include at least one modulating compressor that enables the thermal power produced to be adjusted by varying the revolutions of the electric motor. The proposed system can be used in the domestic, commercial and industrial sectors for applications of heat production, cold production or simultaneous heat and cold production. The proposed solution can be used with any system for producing electricity produced by renewable sources with grid connection, whether they come from solar photovoltaic energy or wind energy or another technology.

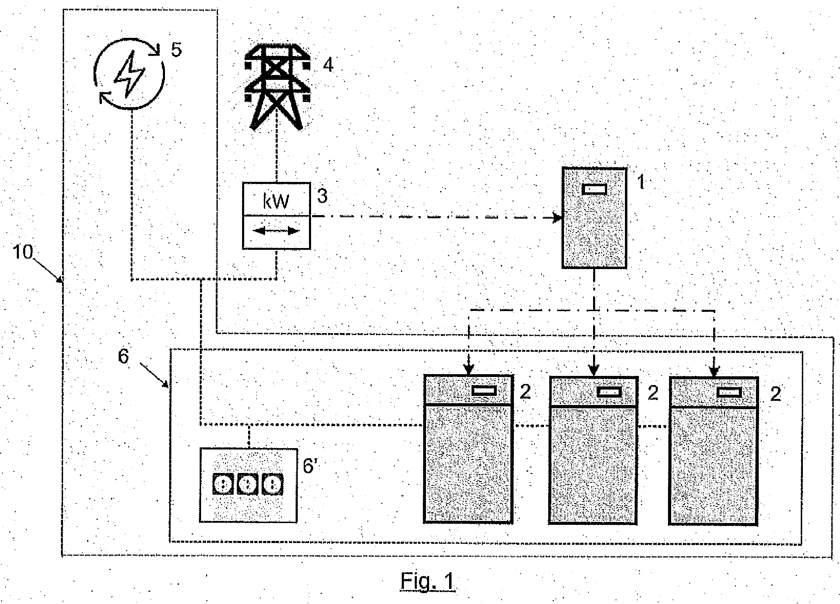

**Figure 1** shows an embodiment of the system for managing excess formed by a control unit 1 and one or several heat pumps 2 that incorporate one or several modulating compressors.

The control unit 1 is installed together with one or several heat pumps 2 that include the technology for managing excess. Said control unit 1 comprises a programmable controller provided with software developed ad hoc with access to the reading of a bidirectional energy counter or bidirectional energy meter 3. The functionality of managing excess is included among the different applications allowed by the control unit 1. This functionality enables the monitoring of the energy balance between the electrical grid 4 and an electrical installation 10 with a renewable production system 5 and electrical loads 6 of the installation (which include one or several heat pumps 2 and additional electrical loads 6' of the installation), detecting in real time whether there is net electricity production or consumption of the renewable production system 5 (i.e. system for generating by means of renewable sources) with respect to the electrical grid 4.

In the case that electrical energy exceeding a specific value for a time is injected in the grid 4, the control unit 1 sends a variable to the heat pump 2 that indicates that there is excess. Moreover, the control unit 1 accesses the heat pump 2 to generate demands of extra production and, at the same time, it transmits information to it about how it should adjust the consumption of the compressor to restore the balance between production and consumption with respect to the electrical grid. In the case that the injection to the network falls below a specific value for a time, or there is net consumption that reaches a given value, the control unit 1 deactivates the variable in the heat pump that indicates that there is excess. For greater flexibility of the system, the values of the balance (injected / consumed W), in which the control of excess is activated/deactivated, and the connection/disconnection times can be configured.

To generate the demands of extra production, the control unit 1 accesses the heat pump 2 and writes different values of temperature in excess mode, which generate demands of extra production in the heat pump, either for heat production (DHW, heating, pool, heat for industrial processes, etc.) or cooling (air conditioning, cooling for industrial processes, etc.). Next, the possible values of temperature in excess mode that can be sent to the heat pump 2 are indicated (to provide greater flexibility of use or adaptation to the thermal installation, these values of excess temperature can be configured by the user):
- EXCESS DHW TEMPERATURE: Objective temperature that the heat pump must maintain in the DHW accumulator.
- EXCESS TEMPERATURE OF HEATING BUFFER ACCUMULATOR: Objective temperature that the heat pump must maintain in the heating buffer accumulator.
- EXCESS TEMPERATURE OF COOLING BUFFER ACCUMULATOR: Objective temperature that the heat pump must maintain in the cooling buffer accumulator.
- EXCESS POOL TEMPERATURE: Objective temperature that the heat pump must maintain in the pool basin.
- EXCESS FLOW TEMPERATURE: Objective flow temperature that the heat pump must maintain in the supply to the service for both heating and cooling applications.
- EXCESS AMBIENT TEMPERATURE: Objective ambient temperature that the heat pump must maintain in an area to be temperature-controlled.

Depending on the configuration of the heat pump 2, installation type and activated operating program, the heat pump 2 uses some temperature values or others to generate the demands of excess production. Moreover, the control unit 1 monitors the balance of electrical energy with respect to the network and, by means of a PID controller, for example, it creates a proportional variable between 0 and 100 with respect to the value of the energy balance that is to be stabilized. The value of the balance that is to be stabilized will normally be 0, in other words, a balance that adjusts consumption to production. However, to provide greater flexibility of use of the system, it is possible to configure other values, such as, for example, stabilizing a net consumption of 0.5 kW (-0.5 kW) or a net production of 0.5 kW (+0.5 kW).

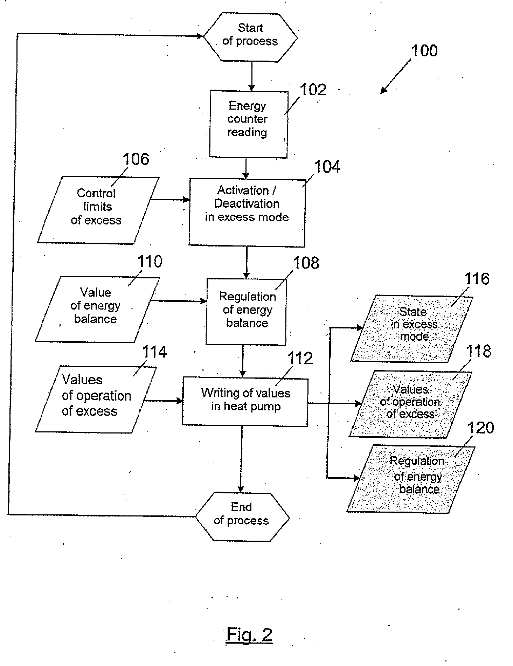

**Figure** 2 shows, according to one possible embodiment, the flow chart of the process 100 executed in the control unit 1 to use the excess energy. Firstly, the control unit 1 reads the energy counter 102 (bidirectional energy meter) to know the balance in real time between the grid and the installation.

The control unit 1 checks 104, based on said measurements and one or several thresholds or control limits of excess 106. whether the work mode with excess energy is activated or deactivated. The control limits of excess 106 can be configured by the user. In said check 104, the control unit 1 can also take into account the fact that the control limits of excess 106 may be repeatedly exceeded for at least an established time, and not at a single occasional reading of the energy counter.

When the regulation of the energy balance is activated, the control unit 1 proceeds to regulate the energy balance 108 with respect to the grid, considering a value of the energy balance 110 that is to be established between the grid and the installation. Said value of energy balance, normally set at 0, can be configured by the user.

Finally, the unit control 1, based on values of operation of excess 114 (previously defined and configured by the user) and the previously obtained data, sends 112 the following control variables to the heat pump 2:
- State in excess mode 116: variable that indicates that there is excess.
- Values of operation in excess mode 118: values of temperature in excess mode explained above.
- Regulation of energy balance 120: variable proportional to the consumption of the heat pump 2 needed to adjust the energy balance between the grid and the installation to the value desired.

In the flowchart of Figure 2, the white parallelograms (references 106, 110 and 114) represent the configurable data previously provided by the user, while the gray parallelograms (references 116, 118 and 120) represent the control data or variables sent from the control unit 1 to the heat pump 2.

The heat pump 2 includes management software with a functionality for managing excess, which enables it to receive information from the control unit 1 and act according to the operating parameters thereof to carry out consumption of the compressor that adjusts in real time to the excess electricity production of the installation. The heat pump 2 uses the information received from the unit control 1 to carry out extra thermal production with the excess electricity generated by the renewable system, without creating significant additional electricity consumption. Said extra thermal energy can be stored in different elements of the thermal installation, such as heating and cooling buffer accumulators, DHW accumulator, pool, mortar of radiant floor systems, in the ambient air of rooms to be climatized or others.

To successfully perform this functionality of managing excess, it is important to ensure that the heat pump 2 and the thermal installation as a whole are maintained within the permitted operating ranges at all times. Moreover, it must be ensured that the control of power consumed applied by the control unit 1 to the heat pump 2 does not entail a decline in the performance of the heat pump 2; otherwise, it would not ensure the input of power required to meet the base needs of the thermal installation.

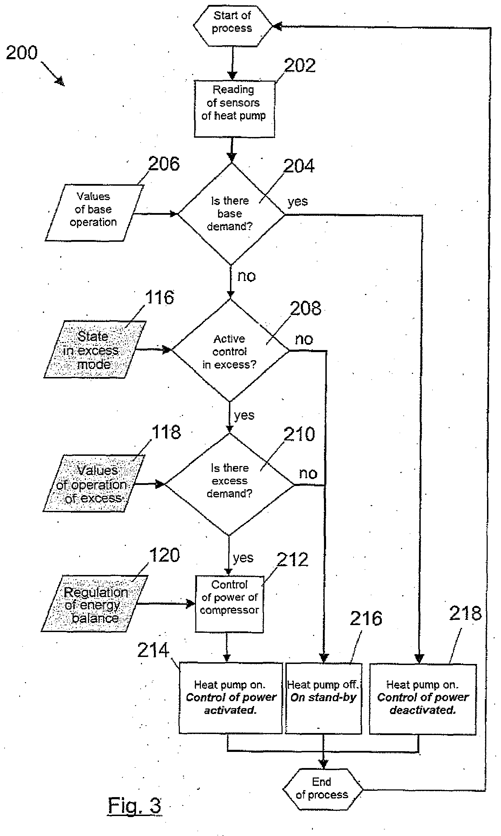

To meet these requirements, the heat pump 2 manages two types of production demand: on one hand, the demands generated by the values of operation of the thermal installation (values of base operation), and on the other hand, the demands generated by the values of operation received from the control unit 1 (values of operation in excess mode 118). **Figure 3** shows the process flowchart 200 executed by the functionality of managing excess executed in the heat pump 2, which starts with a reading 202 of the sensors of the heat pump. Based on the values of the different variables and values received, the heat pump 2 distinguishes between the following situations to determine how it should act:
1. There is base demand: In the step 204, the heat pump checks if there is base demand, in which case the thermal installation does not meet the values of base operation 206. The heat pump 2 operates normally without taking into account the information received from the control unit 1, regardless of whether the excess management mode is active or not. Therefore, the heat pump remains on but with the control of power deactivated 218 (the control of power consumed by the heat pump to ensure that the requirements of the thermal installation are adequately fulfilled is not applied).
2. There is no base demand nor excess electricity: Once it has been verified in 204 that there is no base demand, in the step 208 the heat pump 2 checks if there is active excess electricity (checks the value of the state in excess mode 116). In this case, the thermal installation meets the values of base operation but there is no excess electrical energy that can be used to produce and store thermal energy in the installation. Therefore, the heat pump 2 turns off 216 and remains on stand-by until some demand for production is activated.
3. There is no base demand, there is excess electricity, and there is no demand for excess: In this situation, the thermal installation meets the values of base operation 206 (i.e. there is no base demand) and there is excess electrical energy, but in the step 210 it is shown, however, that there is no capacity to store thermal energy in the installation since the values of operation in excess mode 118 are met. In this situation, the heat pump 2 turns off 216 and remains on stand-by until some demand for production is activated.
4. There is no base demand, there is excess electricity, and there is demand for excess: In this situation, the thermal installation meets the values of basic operation, there is excess electrical energy and there is the capacity to store thermal energy in the installation. The heat pump 2 operates by storing thermal energy in different elements of the thermal installation (accumulators, pool, mortar of the radiant floor or air from the rooms), but by applying, in this case, a control of power 212 consumed of the compressor to adjust the energy balance with the electrical grid to the value established in the control unit 1 by means of the variable of regulation of energy balance 120. To do so, the heat pump 2 takes the regulation signal received from the control unit 1 as a maximum reference of consumption and tries to adjust to it, without failing to take into account the operating limits of both the heat pump 2 and the thermal installation in general. The heat pump remains on with the control of power activated 214.

Thus, the heat pump 2 ensures that the demands of base production are met, regardless of whether or not there is excess electricity production, at the same time that the excess electricity production is used to store thermal energy by means of the use of the heat pump without generating significant extra electricity consumption. In this diagram, the white parallelogram (reference 206) represents the configurable data provided by the user, and the gray parallelograms (reference 116, 118 and 120) represent the data received from the control unit 1.

The heat pump 2 must be capable of managing different production demands for the production base and for the production using excess. To do so, it must be capable of identifying the different cases mentioned above in order to not reduce consumption that may undermine the base production. To regulate the energy balance, control of power of the compressor 212, the signal generated (by a PID, for example) must not be directly used to adjust the speed of the compressor. The compressor must take this information as an upper limit of consumption since there may be other restrictions that do not allow the compressor to work under the conditions imposed.

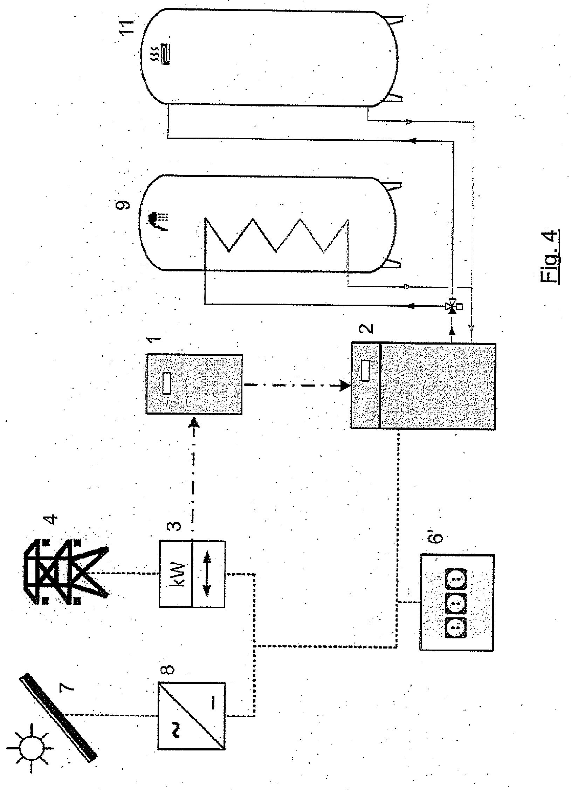

The operation and objective of the invention can be better understood with a brief description of an example of practical application for the use of the excess electricity generated by a photovoltaic solar system connected to a grid, as shown in **Figure 4****.**

An electrical generator formed by photovoltaic modules 7 receives sunlight and transforms it into direct current. An inverter 8 connected to the grid transforms the direct current into alternating current under the voltage and frequency conditions needed to power both the heat pump 2 and the additional electrical loads 6' of the installation, as well as the injection thereof into the electrical grid 4. A bidirectional energy meter 3, placed on some border point between the electrical grid 4 and the loads (heat pump 2 and additional electrical loads 6' of the installation), records the value of the energy balance in real time. The alternating current coming from the inverter 8 or from the electrical grid 4 is distributed to supply the electrical loads of the installation 6.

The control unit 1 collects the value of the balance of the bidirectional energy meter 3. Based on this data, the control unit 1 determines whether the system is in a situation with excess electricity and it acts according to the control parameters of the heat pump 2 to generate demands of excess and modulate the consumption thereof to adjust the energy balance to the configured value. The heat pump 2 produces thermal energy by adjusting the objective value of balance between the electrical grid 4 and the installation. This thermal energy (both heat and cold) is accumulated in a DHW tank 9 and a heating buffer tank 11.

An example of operation of the installation described above, considering the following configuration in the control unit 1 and in the heat pump 2, is shown below.
Values of base operation 206 programmed in the heat pump 2:
- *DHW base temperature =* 45°C
- *Heat buffering base temperature* = 45°C
Values of operation of excess 114 programmed in the control unit 1:
- *DHW excess temperature =* 60°C
- *Heat buffering excess temperature =* 55°C
Operating limits of the excess mode 106 programmed in the control unit 1:
*Upper limit regulation =* 0.5 kW
*Lower limit regulation* = 2 kW
*Upper time regulation* = 30 s
*Lower time regulation* = 30 s
*Value of balance* = 0 kW

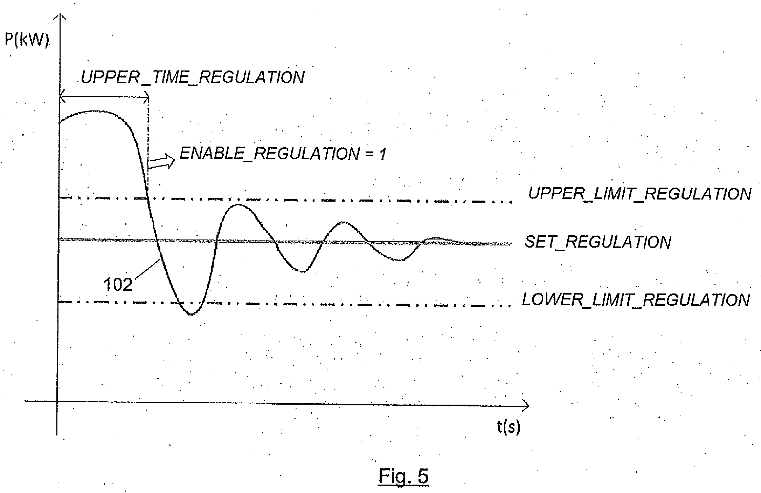

When the control unit 1 detects that more than 0.5 kW is being injected into the electrical grid for more than 30 seconds, it enables the regulation of the excess electricity. **Figure 5** shows a sample reading of the energy counter 102 and the different variables established. The first section of the graph demonstrates that the conditions for enabling the regulation are met, since the power read on the counter is greater than the upper limit of regulation (*UPPER_LIMIT_REGULATION*) for a time longer than the threshold marked (*UPPER_TIME_REGULATION*).

The heat pump 2 shows that the values of base operation 206 are met, in other words, the DHW accumulator and the heating buffer accumulator have reached 45°C. In the case that the DHW and heating accumulators do not reach 45°C, the heat pump 2 provides these services as usual without applying power control to the compressor. In the case that the base values in the DHW and heating buffer accumulators reach 45°C, the heat pu mp 2 checks that the excess control mode has been activated by the unit control 1. If this is the case, the heat pump takes the values of excess provided by the control unit 1. Thus, the value of the DHW tank would become 65°C and the value of the heating buffer tank would be 55°C. The control unit 1 generates a value variable between 0 and 100 proportional to the difference between the true energy balance between the grid and the installation and the desired balance. The heat pump 2 aims to meet the values of excess temperature but by applying power control to the compressor according to the value indicated by the control unit 1. In the final section of the graph of Figure 5, it can be seen how once the adjustment of power consumed by the heat pump is activated, the energy balance with respect to the grid approaches the desired value, in this case, 0 kW.

In the case that the production decreases or the consumption of the installation increases and the balance of the grid goes on to indicate consumption of the grid greater than 2 kW for 30 seconds, the control unit 1 deactivates the regulation of excess. The heat pump 2 once again meets the demands of base operation without applying power control. In the case that these demands are met, the heat pump 2 will turn off and will remain on stand-by until some start demand is activated, either due to the values of base operation or excess.

The heat pump 2 alternates between the previous situations to use the excess electricity generated by the photovoltaic installation as much as possible, without thereby generating significant unnecessary extra consumption, at the same time that the production needed to cover the basic demands is ensured, in other words, to maintain a temperature of 45°C in the heating buffer accumulator as well as in the DHW accumulator.

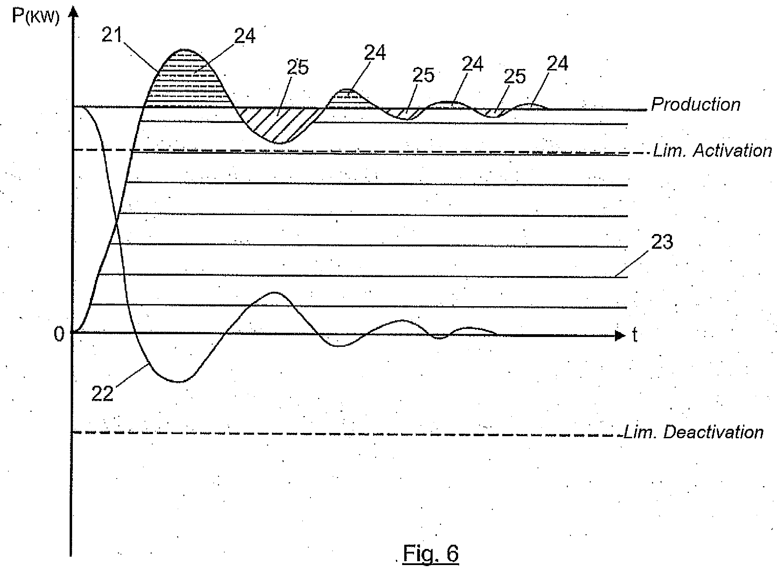

**Figure** 6 shows an example of the regulation of excess energy by using a modulating heat pump, according to the present invention. The graph shows the evolution of the speed of the compressor 21 and the energy balance 22 of injection/consumption between the electrical grid 4 and the installation. The striped area with solid horizontal lines 23 shows the use of the excess for thermal energy production by means of the heat pump 2 for a given period of time. The striped area with dotted horizontal lines 24 shows the net consumption with respect to the grid. Finally, the striped area with diagonal lines 25 shows the excess electricity unused by the system.

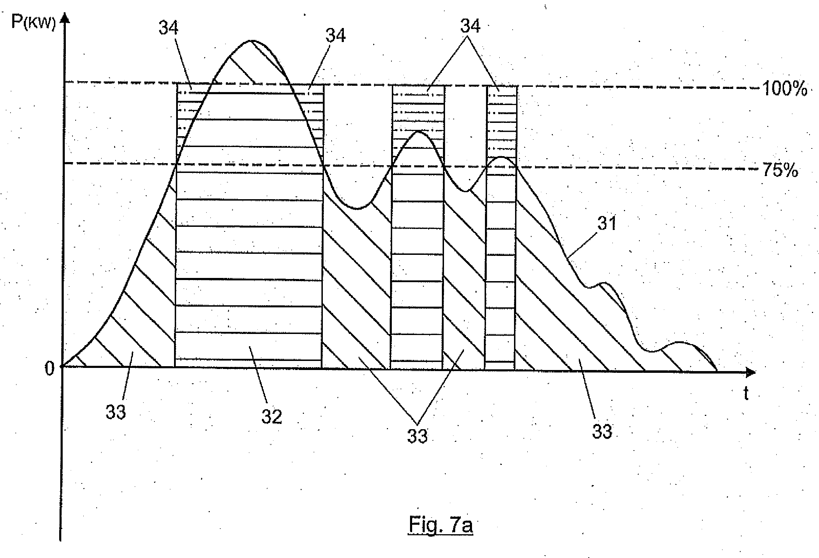

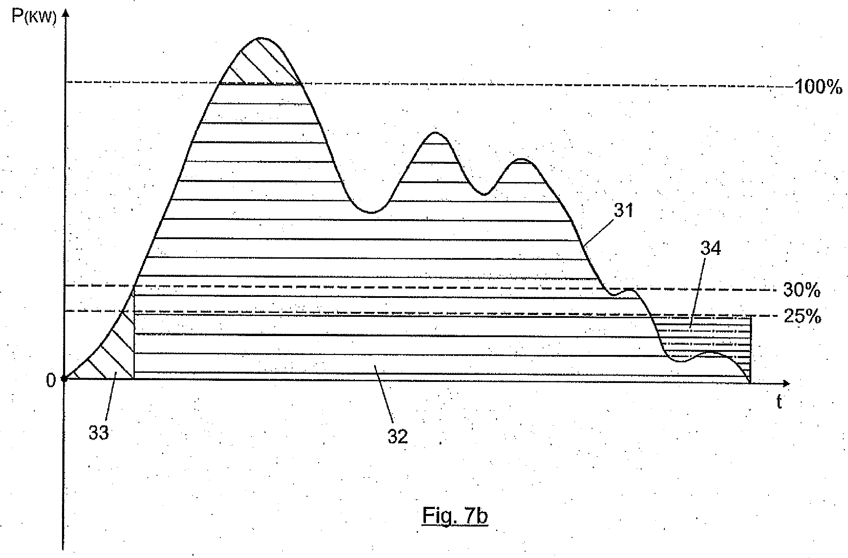

**Figures 7A** and **7B** show a comparison between the potential of use of excess electricity with an all/nothing heat pump (Figure 7A) and a modulating heat pump with technology for managing excess according to the present invention (Figure 7B). Both graphs represent a profile for excess electricity 31 generated by the photovoltaic system with a solid line where the horizontally striped area represents the potential of use of the excess 32, the striped area with solid diagonal lines represents the unusable excess 33 and the striped area with dotted horizontal lines represents the extra electricity consumption 34 that is generated upon activating the system. As can be seen, the potential of use of the excess 32 of modulating heat pump system (Figure 7B) is much greater than the potential of use of the excess 32 of a system with an all/nothing heat pump (Figure 7A).

The activation of the all/nothing compressor for restoring the energy balance entails extra electricity consumption in most cases, due to the fact that the electricity consumption of the compressor is greater than the excess. As the limit of activation of the all/nothing heat pump is reduced, the use of excess increases; however, the extra electricity consumption generated also increases. Therefore, significant injections to the grid with respect to the consumption of the heat pump are required so that it compensates the activation thereof.

The modulating compressor of the heat pump 2, however, can be activated to consume the excess at levels of injection significantly lower than the all/nothing compressor, without compromising the efficiency of the system, since consumption of the grid is only generated in the case that the power produced is not enough to maintain the minimum speed of the compressor.

The fact that the consumption of the modulating heat pump can be adjusted to the production almost instantaneously makes it a very effective solution for accumulating excesses, even with sudden variations in the generation which are typical of renewable sources. The accumulation of thermal energy in the periods of greater production entail important energy savings in any installation that requires these services, especially taking into account that the temperature control solutions are usually solutions that entail high electricity consumption.

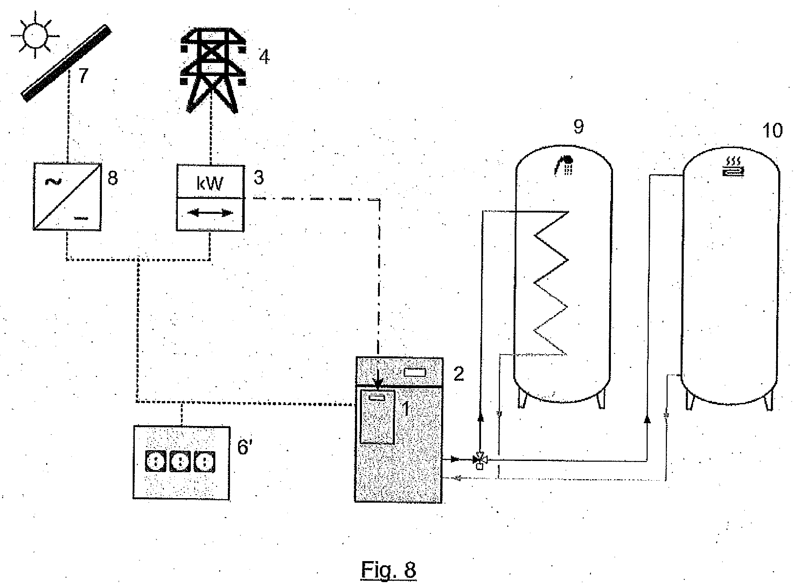

**Figure 8** shows another possible embodiment, using the example of Figure 4, where the functionality of managing excess is not carried out in two independent and separated pieces of equipment (heat pump 2 and control unit 1), but instead the functionality provided by the control unit 1 is implemented directly in the heat pump 2. In other words, the heat pump includes all software for managing excess and only uses an external energy counter (bidirectional energy meter 3) to read the information on the energy balance. At the logical level of blocks, it is considered that the control unit 1 is included in the heat pump 2 itself (the control unit 1 can be the very control electronics of the heat pump, duly programmed).

In the embodiments shown in Figures 4 and 8, the bidirectional energy meter 3 is an element outside the control unit 1 that is installed on any point of the electrical installation and monitors the exchange of energy between the grid and the installation. In another embodiment, said bidirectional energy meter 3 can be incorporated in the control unit 1 itself. Moreover, the current renewable production systems have equipment that measure and use information on the energy balance with the grid to regulate the system, such as for example an inverter with a photovoltaic system. Therefore, it is also possible to read the information of the energy balance directly on the equipment of the renewable production system without needing to use an energy counter. Thus, the system uses means of measuring the energy balance between the installation with the electrical grid, where said means of measuring can be implemented in different ways, such as, for example, by means of the bidirectional energy meter 3 outside of the control unit 1 as shown in Figures 4 and 8.

## Claims

1. A system for using excess electrical energy produced by an installation supplied with renewable electricity generation and further supplied by a power grid, comprising:
a heat pump (2) with at least one modulating compressor and configured to adjust its consumed power based on a production value of renewable energy generation;
a control unit (1) configured to:
monitor the energy balance between the electrical grid (4) and the electrical installation (10) with a renewable production system (5);
determine, based on said energy balance and at least one control limit of excess (106), if it enables the regulation of excess energy;
calculate a value of excess production of the installation that includes at least one operating parameter of the heat pump (2) to adjust the energy balance of the electrical installation (10) and the electrical grid (4) according to a specific value of the energy balance (110);
send the value of excess production to the heat pump (2); **characterized in that** the heat pump (2) is configured to manage base production demands according to at least one value of base operation (206) of the installation and, when receiving a value of excess production, to manage the demand of excess energy production of the installation according to the value of excess production received.

2. The system according to claim 1, **characterized in that** it comprises means of measuring the energy exchange between the electrical grid (4) and the electrical installation (10).

3. The system according to claim 2, **characterized in that** the means of measuring the energy exchange between the electrical grid (4) and the electrical installation (10) comprise a bidirectional energy meter (3); where the control unit (1) is configured to monitor the energy balance based on the measurements received from the bidirectional energy meter (3).

4. The system according to any of the preceding claims, **characterized in that** the control unit (1) is configured to calculate a value of excess production that restores the energy balance between the electrical grid (4) and the electrical installation (10).

5. The system according to any of the preceding claims, **characterized in that** the value of excess production comprises an energy balance control signal (120) indicative of the demand of excess production that the heat pump (2) should generate or consume.

6. The system according to any of the preceding claims, **characterized in that** the value of excess production comprises at least one value of operation in excess mode (118) indicative of the temperature value of at least one production service of the heat pump (2).

7. The system according to claim 6, **characterized in that** the at least one value of operation in excess mode (118) comprises at least one of the following:
- excess DHW temperature;
- excess temperature of heating buffer accumulator;
- excess temperature of cooling buffer accumulator;
- excess pool temperature;
- excess flow temperature;
- excess ambient temperature.

8. The system according to any of the preceding claims, **characterized in that** the value of excess production comprises a signal of the state in excess mode (116) indicative that the regulation of excess energy is enabled.

9. The system according to any of the preceding claims, **characterized in that** the at least one control limit of excess (106) comprises at least one of the following:
- upper limit of power exchanged between the electrical grid (4) and the electrical installation (10);
- lower limit of power exchanged between the electrical grid (4) and the electrical installation (10);
- time during which the upper limit of power is exceeded;
- time during which the lower limit of power is exceeded;

10. The system according to claim 1, **characterized in that** the heat pump (2) is configured to manage the demand of excess energy production when the following conditions are met:
- there is no demand of base production to be met;
- a signal of the state in excess mode (116) indicative that the regulation of excess energy is enabled is received;
- and there is excess electrical energy that can be used to produce or store thermal energy in the electrical installation (10).

11. A method for using excess electrical energy produced by an installation supplied with renewable electricity generation and further supplied by a power grid, comprising:
monitoring (102) the energy balance between the electrical grid (4) and the electrical installation (10) with a renewable production system (5);
determining (104), based on said energy balance and at least one control limit of excess (106), if it enables the regulation of excess energy;
calculating (108) a value of excess production of the installation that includes at least one operating parameter of a heat pump (2) with at least one modulating compressor in order to adjust the energy balance of the electrical installation (10) and the electrical grid (4) according to a specific value of the energy balance (110);
sending (112) the value of excess production to the heat pump (2);
adjusting, by means of the heat pump (2), the power consumed based on the value of excess production received; **characterized in that** the method further comprises:
managing, by the heat pump (2), base production demands according to at least one value of base operation (206) of the installation and, when receiving a value of excess production, managing the demand of excess energy production of the installation according to the value of excess production received.

## Patentansprüche

1. System zur Nutzung der von einer mit erneuerbarer Stromerzeugung versorgten Anlage erzeugten überschüssigen elektrischen Energie, ferner von einem Stromnetz versorgt, Folgendes umfassend:
eine Wärmepumpe (2) mit mindestens einem modulierenden Kompressor, und die so ausgebildet ist, dass sie ihre Leistungsaufnahme auf der Grundlage eines Produktionswertes der erneuerbaren Energieerzeugung einstellt;
eine Steuereinheit (1), die ausgebildet ist, um:
die Energiebilanz zwischen dem elektrischen Netz (4) und der elektrischen Anlage (10) mit einem erneuerbaren Produktionssystem (5) zu überwachen;
auf der Grundlage der Energiebilanz und mindestens einer Überschuss-Steuerungsgrenze (106) zu bestimmen, ob sie die Regelung des Energieüberschusses aktiviert;
einen Wert der Überschussproduktion der Anlage berechnen, der mindestens einen Betriebsparameter der Wärmepumpe (2) einschließt, um die Energiebilanz der elektrischen Anlage (10) und des elektrischen Netzes (4) gemäß einem bestimmten Wert der Energiebilanz (110) einzustellen;
den Wert der Überschussproduktion an die Wärmepumpe (2) zu senden;
**dadurch gekennzeichnet, dass** die Wärmepumpe (2) so ausgebildet ist, dass sie die Basisproduktionsbedarfe gemäß mindestens einem Basisbetriebwert (206) der Anlage verwaltet und, wenn sie einen Wert der Überschussproduktion empfängt, den Bedarf der Produktion von Energieüberschuss der Anlage gemäß dem empfangenen Wert der Überschussproduktion verwaltet.

2. System gemäß Anspruch 1, **dadurch gekennzeichnet, dass** es Mittel zur Messung des Energieaustauschs zwischen dem elektrischen Netz (4) und der elektrischen Anlage (10) umfasst.

3. System gemäß Anspruch 2, **dadurch gekennzeichnet, dass** die Mittel zur Messung des Energieaustauschs zwischen dem elektrischen Netz (4) und der elektrischen Anlage (10) einen bidirektionalen Energiezähler (3) umfassen; wo die Steuereinheit (1) so ausgebildet ist, dass sie die Energiebilanz auf der Grundlage der von dem bidirektionalen Energiezähler (3) empfangenen Messungen überwacht.

4. System gemäß einem der vorhergehenden Ansprüche, **dadurch gekennzeichnet, dass** die Steuereinheit (1) ausgebildet ist, um einen Wert der Überschussproduktion zu berechnen, der die Energiebilanz zwischen dem elektrischen Netz (4) und der elektrischen Anlage (10) wiederherstellt.

5. System gemäß einem der vorhergehenden Ansprüche, **dadurch gekennzeichnet, dass** der Wert der Überschussproduktion ein Energiebilanz-Steuersignal (120) umfasst, das den Bedarf an Überschussproduktion angibt, die die Wärmepumpe (2) erzeugen oder aufnehmen soll.

6. System gemäß einem der vorhergehenden Ansprüche, **dadurch gekennzeichnet, dass** der Wert der Überschussproduktion mindestens einen Wert des Betriebs im Überschussmodus (118) umfasst, der den Temperaturwert mindestens einer Produktionsleistung der Wärmepumpe (2) angibt.

7. System gemäß Anspruch 6, **dadurch gekennzeichnet, dass** der mindestens einen Wert des Betriebs im Überschussmodus (118) mindestens eines der Folgenden umfasst:
- Übertemperatur des Warmwassers;
- Übertemperatur des Heizungspufferspeichers;
- Übertemperatur des Kühlpufferspeichers;
- Übertemperatur des Schwimmbeckens;
- Vorlaufübertemperatur;
- Umgebungsübertemperatur.

8. System gemäß einem der vorhergehenden Ansprüche, **dadurch gekennzeichnet, dass** der Wert der Überschussproduktion ein Signal des Zustands im Überschussmodus (116) umfasst, das anzeigt, dass die Regelung des Energieüberschusses aktiviert ist.

9. System gemäß einem der vorhergehenden Ansprüche, **dadurch gekennzeichnet, dass** die mindestens eine Überschuss-Steuerungsgrenze (106) mindestens eines der Folgenden umfasst:
- obere Grenze der zwischen dem elektrischen Netz (4) und der elektrischen Anlage (10) ausgetauschten Leistung;
- untere Grenze der zwischen dem elektrischen Netz (4) und der elektrischen Anlage (10) ausgetauschten Leistung;
- Zeit, während der die obere Grenze der Leistung überschritten wird;
- Zeit, während der die untere Grenze der Leistung überschritten wird.

10. System gemäß Anspruch 1, **dadurch gekennzeichnet, dass** die Wärmepumpe (2) so ausgebildet ist, dass sie den Bedarf der Produktion von Energieüberschuss verwaltet, wenn folgende Bedingungen erfüllt sind:
- es besteht kein Bedarf an Basisproduktion, der erfüllt werden muss;
- es wird ein Signal des Zustands im Überschussmodus (116) empfangen, das anzeigt, dass die Regelung des Energieüberschusses aktiviert ist;
- und es gibt überschüssige elektrische Energie, die zur Produktion oder Speicherung von Wärmeenergie in der elektrischen Anlage (10) genutzt werden kann.

11. Verfahren zur Nutzung der von einer mit erneuerbarer Stromerzeugung versorgten Anlage erzeugten überschüssigen elektrischen Energie, ferner von einem Stromnetz versorgt, Folgendes umfassend:
Überwachen (102) der Energiebilanz zwischen dem elektrischen Netz (4) und der elektrischen Anlage (10) mit einem erneuerbaren Produktionssystem (5);
Bestimmen (104), auf der Grundlage der Energiebilanz und mindestens einer Überschuss-Steuerungsgrenze (106), ob sie die Regelung des Energieüberschusses aktiviert;
Berechnen (108) eines Wertes der Überschussproduktion der Anlage, der mindestens einen Betriebsparameter einer Wärmepumpe (2) mit mindestens einem modulierenden Kompressor einschließt, um die Energiebilanz der elektrischen Anlage (10) und des elektrischen Netzes (4) gemäß einem bestimmten Wert der Energiebilanz (110) einzustellen;
Senden (112) des Wertes der Überschussproduktion an die Wärmepumpe (2);
Einstellen, mittels der Wärmepumpe (2), der Leistungsaufnahme auf der Grundlage des empfangenen Wertes der Überschussproduktion;
**dadurch gekennzeichnet, dass** das Verfahren ferner Folgendes umfasst:
Verwalten, mittels der Wärmepumpe (2), der Basisproduktionsbedarfe gemäß mindestens einem Basisbetriebwert (206) der Anlage und, wenn sie einen Wert der Überschussproduktion empfängt, Verwalten des Bedarfs der Produktion von Energieüberschuss der Anlage gemäß dem empfangenen Wert der Überschussproduktion.

## Revendications

1. Un système d'utilisation de l'énergie électrique excédentaire produite par une installation alimentée en électricité produite à partir de sources renouvelables et alimentée ensuite par un réseau électrique, comprenant :
une pompe à chaleur (2) avec au moins un compresseur modulant et configurée pour ajuster sa puissance consommée sur la base d'une valeur de production de l'énergie renouvelable ;
une unité de contrôle (1) configurée pour :
surveiller le bilan énergétique entre le réseau électrique (4) et l'installation électrique (10) avec un système de production d'énergie renouvelable (5) ;
déterminer, sur la base dudit bilan énergétique et d'au moins une limite de contrôle de l'excès (106), si elle permet de réguler l'excès d'énergie ;
calculer une valeur de production excédentaire de l'installation qui inclut au moins un paramètre de fonctionnement de la pompe à chaleur (2) pour ajuster le bilan énergétique de l'installation électrique (10) et du réseau électrique (4) en fonction d'une valeur spécifique du bilan énergétique (110) ;
d'envoyer la valeur de la production excédentaire à la pompe à chaleur (2) ;
**caractérisé en ce que** la pompe à chaleur (2) est configurée pour gérer les demandes de production de base en fonction d'au moins une valeur de fonctionnement de base (206) de l'installation et, lorsqu'elle reçoit une valeur de production excédentaire, pour gérer la demande de production d'énergie excédentaire de l'installation en fonction de la valeur de production excédentaire reçue.

2. Le système selon la revendication 1, **caractérisé en ce qu'**il comprend des moyens de mesure de l'échange d'énergie entre le réseau électrique (4) et l'installation électrique (10).

3. Le système selon la revendication 2, **caractérisé en ce que** les moyens de mesure de l'échange d'énergie entre le réseau électrique (4) et l'installation électrique (10) comprennent un compteur d'énergie bidirectionnel (3) ; où l'unité de commande (1) est configurée pour surveiller le bilan énergétique sur la base des mesures reçues du compteur d'énergie bidirectionnel (3).

4. Le système selon l'une des revendications précédentes, **caractérisé en ce que** l'unité de contrôle (1) est configurée pour calculer une valeur de production excédentaire qui rétablit le bilan énergétique entre le réseau électrique (4) et l'installation électrique (10).

5. Le système selon l'une des revendications précédentes, **caractérisé en ce que** la valeur de la production excédentaire comprend un signal de contrôle du bilan énergétique (120) indiquant la demande de production excédentaire que la pompe à chaleur (2) devrait générer ou consommer.

6. Le système selon l'une des revendications précédentes, **caractérisé en ce que** la valeur de la production excédentaire comprend au moins une valeur de fonctionnement en mode d'excès (118) indiquant la valeur de température d'au moins un service de production de la pompe à chaleur (2).

7. Le système selon la revendication 6, **caractérisé en ce que** la valeur de fonctionnement en mode d'excès (118) comprend au moins l'une des revendications suivantes :
- température de l'eau chaude sanitaire excessive ;
- température excédentaire de l'accumulateur tampon de chauffage ;
- température excédentaire de l'accumulateur tampon de refroidissement ;
- température excédentaire du bassin ;
- température excédentaire de débit ;
- température excédentaire ambiant.

8. Le système selon l'une des revendications précédentes, **caractérisé en ce que** la valeur de la production excédentaire comprend un signal de l'état en mode d'excès (116) indiquant que la régulation de l'énergie excédentaire est activée.

9. Le système selon l'une des revendications précédentes, **caractérisé en ce qu'au** moins une limite de contrôle de l'excédent (106) comprend au moins l'un des éléments suivants :
- limite supérieure de la puissance échangée entre le réseau électrique (4) et l'installation électrique (10) ;
- limite inférieure de la puissance échangée entre le réseau électrique (4) et l'installation électrique (10) ;
- durée pendant laquelle la limite supérieure de puissance est dépassée ;
- durée pendant laquelle la limite inférieure de puissance est dépassée ;

10. Le système selon la revendication 1, **caractérisé en ce que** la pompe à chaleur (2) est configurée pour gérer la demande de production d'énergie excédentaire lorsque les conditions suivantes sont remplies :
- il n'y a pas de demande de production de base à satisfaire ;
- un signal de l'état en mode d'excédent (116) indiquant que la régulation de l'énergie excédentaire est activée est reçu ;
- et il y a un excès d'énergie électrique qui peut être utilisé pour produire ou stocker de l'énergie thermique dans l'installation électrique (10).

11. Un système d'utilisation de l'énergie électrique excédentaire produite par une installation alimentée en électricité produite à partir de sources renouvelables et alimentée ensuite par un réseau électrique, comprenant :
la surveillance (102) du bilan énergétique entre le réseau électrique (4) et l'installation électrique (10) avec un système de production renouvelable (5) ;
la détermination (104), sur la base dudit bilan énergétique et d'au moins une limite de contrôle de l'excès (106), s'il permet de réguler l'excès d'énergie ;
le calcul (108) d'une valeur de surproduction de l'installation qui inclut au moins un paramètre de fonctionnement d'une pompe à chaleur (2) avec au moins un compresseur modulant afin d'ajuster le bilan énergétique de l'installation électrique (10) et du réseau électrique (4) en fonction d'une valeur spécifique du bilan énergétique (110) ;
l'envoi (112) de la valeur de la production excédentaire à la pompe à chaleur (2) ;
ajuster, au moyen de la pompe à chaleur (2), la puissance consommée sur la base de la valeur de la production excédentaire reçue ;
**caractérisé en ce que** la méthode comprend en outre les étapes de :
la gestion, par la pompe à chaleur (2), des demandes de production de base en fonction d'au moins une valeur de fonctionnement de base (206) de l'installation et, lors de la réception d'une valeur de production excédentaire, la gestion de la demande de production d'énergie excédentaire de l'installation en fonction de la valeur de production excédentaire reçue.
